# FASCICULE DE BREVET EUROPEEN

(11) **EP 2 241 170 B1**
(45) Date de publication et mention de la délivrance du brevet: **15.06.2016**
(21) Numéro de dépôt: 10159771.4
(22) Date de dépôt: 13.04.2010
(51) Int. Cl.: A01B 3/46, A01B 63/14

(54) **Chariot porteur pour charrue semi-portée**
Tragrahmen für einen Aufsatteldrehpflug mit einer Verbindungsstruktur
Carrier frame for semi-mounted plough with a connecting structure

(30) Priorité: 16.04.2009 FR 0952497
(43) Date de publication de la demande: 20.10.2010
(73) Titulaire: Kuhn-Huard S.A., 44142 Châteaubriant (FR)
(72) Inventeur: Perrinel, Christian, 44110, CHATEAUBRIANT (FR); Herault, Vincent, 44470, MAUVES SUR LOIRE (FR); Cueille, Laurent, 44110, ERBRAY (FR)
(74) Mandataire: Esch, Esther Evelyne

(56) Documents cités:
- EP-A2- 0 139 305
- FR-A- 1 402 501
- GB-A- 807 853
- US-A- 4 042 253

## Description

La présente invention se rapporte au domaine technique général du machinisme agricole et en particulier au domaine du travail du sol. Elle concerne notamment un chariot porteur constitué d'une structure longitudinale comportant à son extrémité avant une tête d'attelage destinée à être reliée à un point d'attelage d'un tracteur et s'appuyant au sol via des roues, ladite structure longitudinale est destinée à recevoir à son extrémité arrière une charrue semi-portée, ladite charrue présentant un joint de type cardan comprenant un axe d'articulation sensiblement horizontal et un axe d'articulation sensiblement vertical. Des chariots de ce type sont connus à partir des documents FR 1 402 501 A et US 4 042 253 A1.

Un tel chariot porteur est utilisé pour atteler une charrue semi-portée réversible à un tracteur qui ne comporte pas de système d'attelage en trois points. A l'arrière d'un tracteur comportant un piton d'attelage, il n'est donc pas possible d'atteler une charrue semi-portée qui doit être soulevée ou abaissée par rapport au sol. La charrue semi-portée est ainsi attelée au piton du tracteur par l'intermédiaire d'un chariot porteur. Ce chariot porte la charrue via sa potence par l'intermédiaire d'un système d'attelage en trois points.

L'extrémité arrière de la structure longitudinale présente donc les différents éléments composant un attelage en trois points classique, les deux barres d'attelage inférieures (bras de traction) et la barre d'attelage supérieure. Chaque bras de traction est lié à la structure longitudinale via un point d'appui inférieur et présente un point inférieur pour l'attelage à la potence de la charrue. La barre supérieure est également reliée à la potence de la charrue. Chaque bras de traction est actionné par un vérin simple effet respectif qui permet de soulever ou d'abaisser la charrue. Chaque vérin commande la position du bras de traction correspondant par l'intermédiaire d'un bras de relevage et d'une chandelle de relevage. La reproduction d'un système d'attelage en trois points nécessite donc un nombre important d'articulations et de composants. Pour assurer un déplacement parallèle au sol de la charrue, il faut que les deux bras de traction pivotent ensemble autour de leur point d'appui respectif, ce qui implique que les deux vérins doivent s'étendre respectivement se rétracter simultanément.

On sait qu'une charrue semi-portée présente une grande longueur et en étant attelée derrière le chariot porteur via un système d'attelage en trois points, la longueur de l'ensemble derrière le tracteur est bien augmentée. Avec un tel attelage tracteur/charrue, la largeur des fourrières pour les demi-tours en bout de champ est donc importante et les finitions des parcelles ne sont pas aisées.

Le but de la présente invention est de remédier aux inconvénients précités et de proposer un chariot porteur avec une structure moins complexe avec un coût modéré. Un autre objet de l'invention est de proposer un attelage tracteur/charrue avec une longueur réduite.

A cet effet, l'invention propose un chariot avec les caractéristiques de la revendication 1.

D'autres caractéristiques et avantages de l'invention se dégageront de la description qui va suivre et des exemples de réalisation non limitatifs de l'invention représentés sur les dessins annexés sur lesquels :
- la **figure 1** représente une vue latérale d'un attelage constitué d'un tracteur, d'une charrue et d'un chariot porteur réalisant l'interface,
- la **figure 2** représente une vue latérale d'un chariot porteur conforme à l'invention selon un premier exemple de réalisation,
- la **figure 3** représente une vue de dessus d'un chariot porteur selon un deuxième exemple de réalisation,
- la **figure 4** représente une vue latérale du chariot de la figure 3, dans une position de travail,
- la **figure 5** représente une vue latérale du chariot de la figure 3, dans une position de transport ou en bout de champ.

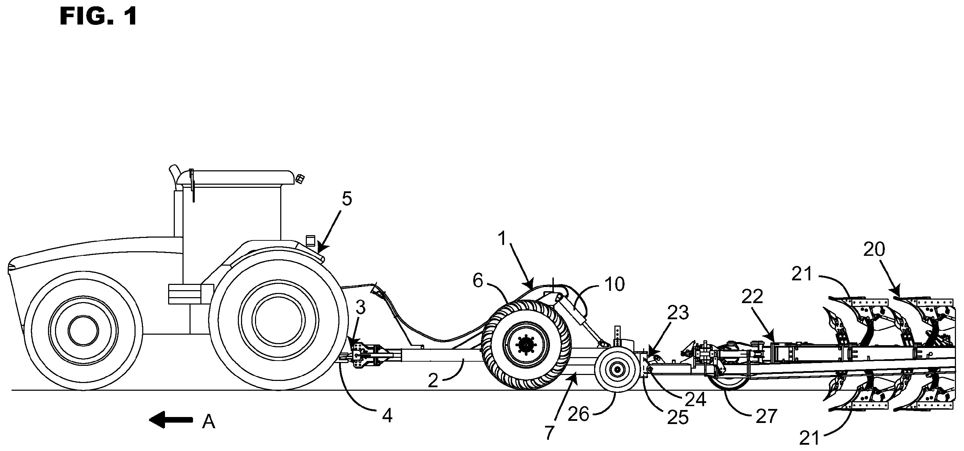

Tel que représenté sur la figure 1, un chariot porteur (1) est constitué d'une structure longitudinale (2) comportant à son extrémité avant une tête d'attelage (3) destinée à être reliée à un système d'attelage composé d'un point d'attelage (4) d'un tracteur (5). Le chariot (1) s'appuie sur le sol via des roues (6) qui s'étendent plutôt dans la partie arrière de la structure longitudinale (2). La structure longitudinale (2) est destinée à recevoir à son extrémité arrière une machine agricole. Ainsi, le chariot (1) est destiné à réaliser l'interface entre la machine agricole et le tracteur (5). Le tracteur (5) servant à animer la machine et à la déplacer dans une direction d'avancement (A).

Dans l'exemple de réalisation représenté sur la figure 1, la machine agricole est une charrue semi-portée (20) de grande longueur présentant plus de sept corps de labour (21). Elle présente donc une largeur de travail importante. La charrue (20) est réversible, un groupe de corps s'étend en dessous du bâti (22) alors que l'autre groupe de corps s'étend au-dessus. Seuls les deux premiers corps de labour ont été représentés sur la figure 1. Pour déplacer une telle charrue de grande largeur de travail, on utilise un tracteur (5) de forte puissance. Ce genre de tracteur est généralement équipé de pneus de grande largeur ou de chenilles. Dans ces deux cas, la raie n'est pas suffisamment large pour recevoir le pneu ou la chenille, ainsi il est nécessaire de travailler en hors raie, c'est-à-dire que le tracteur (5) se déplace complètement sur le sol non labouré et que la charrue (20) est déportée pour le labour. Comme le tracteur de forte puissance est pourvu uniquement d'un point d'attelage (4), une telle charrue (20) doit être attelée au tracteur (5) par l'intermédiaire d'un chariot porteur (1).

La charrue semi-portée (20) présente un joint de type cardan (23) comprenant un axe d'articulation (24) sensiblement horizontal et un axe d'articulation (25) sensiblement vertical. L'axe horizontal (24) permet un débattement au bâti (22) de la charrue (20) de façon à mieux suivre le relief du terrain en particulier dans les terrains ondés. L'axe vertical (25) est sensiblement perpendiculaire à l'axe horizontal (24) et permet à la charrue (20) un meilleur suivi du tracteur (5). Avec un tel axe vertical (25), la maniabilité de l'attelage, formée par le tracteur (5), le chariot (1) et la charrue (20), est améliorée notamment lors des demi-tours en bout de champ. L'axe vertical (25) se situe devant l'axe horizontal (24) compte tenu de la direction d'avance (A).

Selon une caractéristique importante de l'invention, le chariot porteur (1) présente une structure de liaison (7) avec une extrémité avant reliée à ladite structure longitudinale (2) et une extrémité arrière destinée à être reliée à l'un des axes (24, 25) dudit cardan (23). L'extrémité arrière de ladite structure de liaison (7) est déplacée en hauteur par l'intermédiaire d'au moins un organe de manoeuvre (10). Grâce à cette structure de liaison (7) et à l'organe de manoeuvre (10) du chariot porteur (1), la charrue (20) peut être soulevée ou abaissée parallèlement au sol tout en étant accrochée au point d'attelage (4) du tracteur (5). Ce chariot porteur (1) est donc utile aussi bien pour le transport que pour le travail de la charrue semi-portée (20). On remarque que la charrue (20) est reliée via l'un des axes du cardan (23) au chariot porteur (1) et qu'ainsi l'attelage s'affranchit d'une potence. La potence constitue une pièce élémentaire pour un attelage classique d'une charrue semi-portée à un tracteur. En l'absence de potence, on remarque que la longueur de l'attelage est réduite. Ainsi, la largeur de fourrière, pour effectuer les demi-tours, est plus faible en bout de champ.

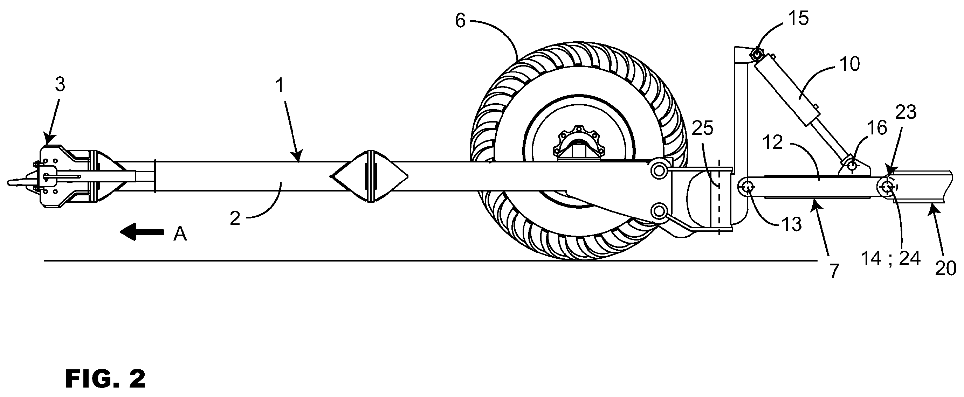

La figure 2 représente un tel chariot porteur (1) conforme à l'invention selon un premier exemple de réalisation. Ce chariot (1) présente une structure de liaison (7) constituée d'une bielle (12). Cette bielle (12) est articulée à ses extrémités suivant des axes parallèles. L'extrémité avant de la bielle (12) est liée à la structure longitudinale (2) au moyen d'une première articulation (13). L'extrémité arrière de la bielle (12) est liée avec le bâti (22) de la charrue (20) au moyen d'une deuxième articulation (14) respective. Ces articulations (13, 14) présentent un axe sensiblement horizontal et perpendiculaire à la direction d'avance (A). L'extrémité arrière de la bielle (12) est reliée à l'axe horizontal (24) du cardan (23). D'une manière avantageuse, l'axe de la deuxième articulation (14) est sensiblement confondu avec l'axe horizontal (24) du cardan (23) de la charrue (20).

L'organe de manoeuvre (10) s'étend, en vue de côté, entre la partie arrière de la structure longitudinale (2) et la charrue semi-portée (20). L'organe de manoeuvre (10) est avantageusement constitué d'un vérin hydraulique du type à double effet. Ce vérin permet de soulever et d'abaisser la charrue semi-portée (20) parallèlement par rapport au sol. L'organe de manoeuvre (10) est ainsi lié à la structure longitudinale (2) via une troisième articulation (15) et est lié à la bielle (12) via une quatrième articulation (16). L'axe des articulations (15, 16) s'étend sensiblement horizontalement et perpendiculairement à la direction d'avance (A).

A la lumière de la figure 2, les axes (24, 25) du cardan (23) sont décalés longitudinalement. L'axe vertical (25) s'étend à l'arrière de la structure longitudinale (2). Cet axe (25) s'étend juste devant la structure de liaison (7). L'axe vertical (25) est disposé plus proche du tracteur (5) que l'axe horizontal (24). Avec une disposition avancée de l'axe vertical (25), le rayon de braquage de l'attelage est plus court.

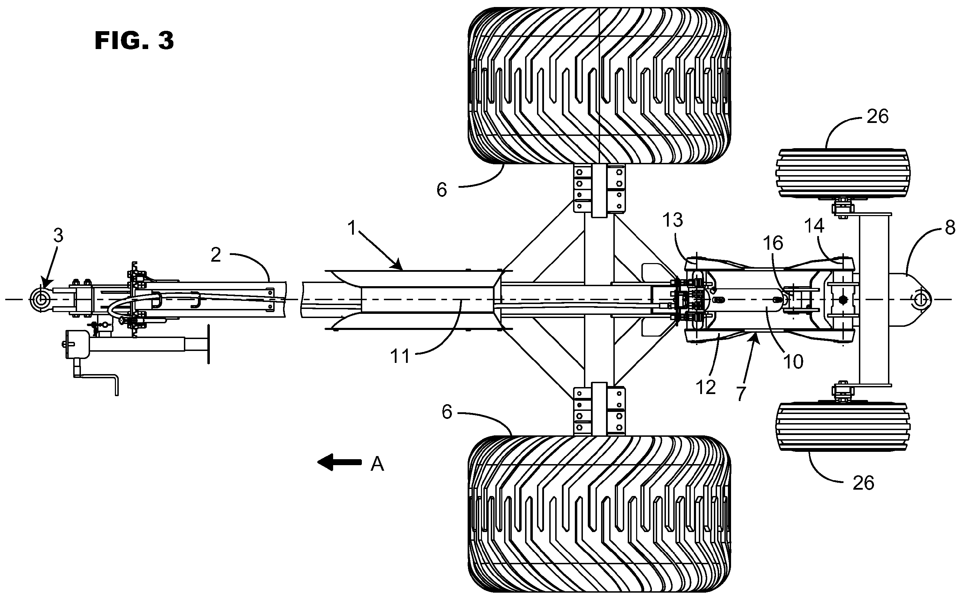

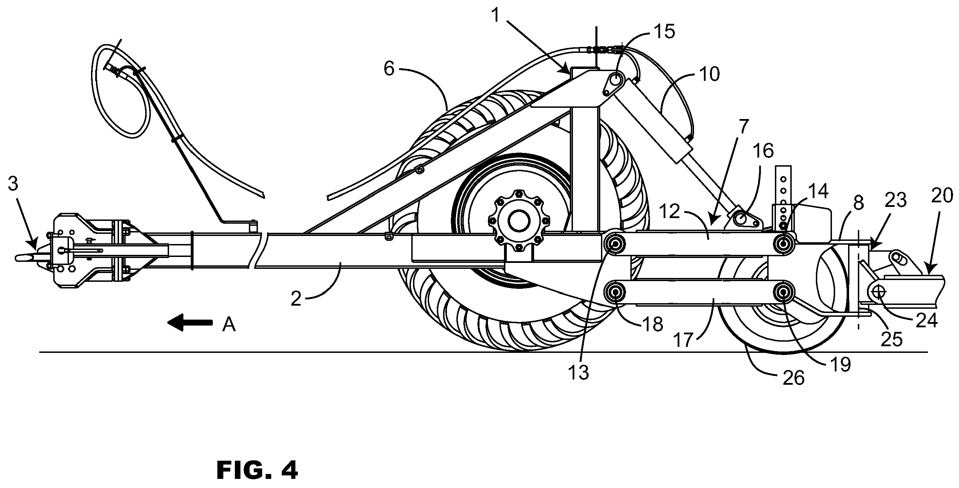

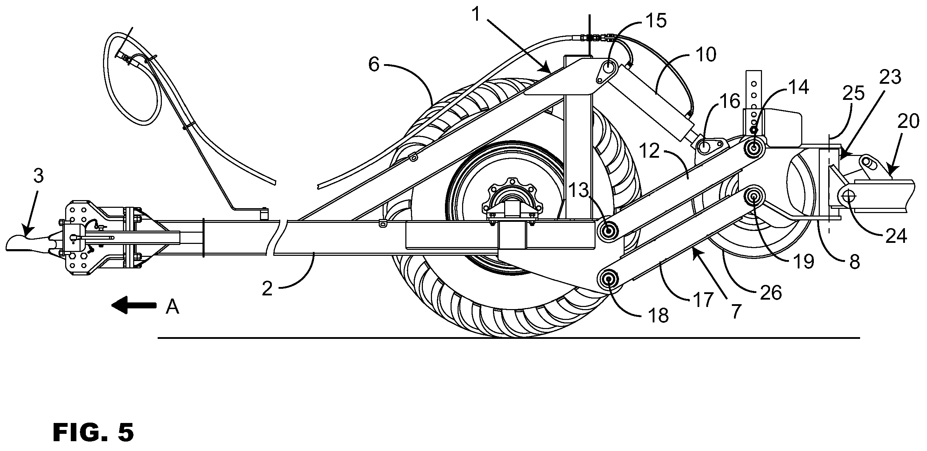

Sur la figure 3 est représenté, en vue de dessus, un chariot porteur (1) selon un deuxième exemple de réalisation. L'organe de manoeuvre (10) est disposé sensiblement dans le plan vertical médian (11) du chariot porteur (1). Cet organe de manoeuvre (10) est constitué d'un seul vérin hydraulique qui s'étend de manière centrale. Les figures 4 et 5 représentent le chariot porteur (1) de la figure 3 selon une vue de côté. La figure 4 est une vue au travail alors que la figure 5 est une vue au transport ou lors d'un demi-tour en bout de champ lorsque la charrue (20) est soulevée.

La structure de liaison (7), selon le deuxième exemple de réalisation, est constituée de la bielle (12) et d'une bielle supplémentaire (17). La structure de liaison (7) est donc constituée d'une paire de bielles (12, 17). Les deux bielles (12, 17) sont disposées de manière à former un quadrilatère déformable verticalement. La bielle supplémentaire (17) s'étend sensiblement en dessous de la bielle (12). La bielle supplémentaire (17) est liée d'une part à la structure longitudinale (2) au moyen d'une cinquième articulation (18) et d'autre part à l'un des axes du cardan (23) au moyen d'une sixième articulation (19) respective. Ces articulations (18, 19) présentent un axe sensiblement horizontal et perpendiculaire à la direction d'avance (A).

On remarque également que la troisième articulation (15) s'étend sensiblement au-dessus des articulations (13, 18) et que leur axes respectifs sont sensiblement alignés. La quatrième articulation (16) s'étend au-dessus et dans le voisinage de la deuxième articulation (14). Les bielles (12, 17) formant un quadrilatère déformable et avantageusement un parallélogramme. Ainsi, la cinquième articulation (18) s'étend sensiblement en dessous de la première articulation (13) et la sixième articulation (19) s'étend sensiblement en dessous de la deuxième articulation (14).

Pour des commodités de construction, l'axe vertical (25) s'étend dans le voisinage de l'axe horizontal (24). Dans le deuxième exemple de réalisation, l'axe vertical (25) est disposé juste à l'avant de l'axe horizontal (24). Ainsi, l'extrémité arrière de la structure de liaison (7) est reliée à l'axe vertical (25) du cardan (23) au moyen d'une chape (8). La chape (8), sous la forme d'une pièce en forme de U qui est destinée à supporter un axe, s'étend sensiblement dans le plan vertical médian (11). Dans cet exemple de réalisation, la chape (8) est orientée de manière à recevoir l'axe sensiblement vertical du cardan (23). Les deuxième et sixième articulations (14, 19) sont reliées à ladite chape (8). L'organe de manoeuvre (10) déforme le parallélogramme de manière à obtenir un dégagement sensiblement vertical et parallèlement à la surface du sol de la charrue semi-portée (20).

On remarque que l'axe vertical (25) reste toujours sensiblement vertical même dans la position relevée de la structure de liaison (7) illustrée dans la figure 5. Même lorsque la charrue est braquée d'environ 90° par rapport au chariot porteur (1), l'axe vertical (25) reste sensiblement vertical. Les contraintes dans cet axe vertical (25) sont réduites lors des manoeuvres. En accrochant la charrue directement sur l'un des axes du cardan (23) à l'arrière de la structure longitudinale (2), la construction du chariot porteur (1) est plus simple et plus légère. Les sollicitations mécaniques notamment les efforts de torsion engendrés par le balourd de la charrue, lors de retournement, sont encaissés par la structure de liaison (7), ici par les bielles (12, 17).

D'une manière avantageuse, la structure de liaison (7) s'appuie au sol via des roues d'appui (26). Une roue d'appui (26) est montée à chaque extrémité de la structure de liaison (7). Ces roues d'appui (26) sont avantageusement réglables en hauteur. Ces roues d'appui (26) permettent un réglage de la profondeur de labour en complément de la roue de régulation (27) implantée à l'avant du bâti (22). La roue de régulation (27) permet le réglage de la profondeur de travail des corps de labour (21) lors du travail en hors raie. Les roues d'appui (26) ainsi que la roue de régulation (27) sont amenées à se déplacer sur la portion de sol non encore retournée.

A la lumière des figures 1 à 4, le point d'attelage (4) du tracteur (5) est constitué d'un piton et la tête d'attelage (3) à l'extrémité avant de la structure longitudinale (2) est constituée d'un anneau. Pour l'attelage au tracteur (5), l'anneau passe par-dessus le piton puis s'abaisse pour entourer le piton. Le verrouillage est assuré par une broche ou un clapet. Avec un tel système d'attelage, un jeu plus ou moins grand peut survenir entre le piton et l'anneau provoquant des à-coups indésirables qui se répercutent sur le tracteur (5). Dans la réalisation de la figure 5, le système d'attelage est un attelage du type à rotule. Le point d'attelage (4) est constitué d'une rotule qui est saisie par la coquille de la tête d'attelage (3). La coquille a la forme d'une demi-sphère. Avec ce système d'attelage, il y a une grande surface d'appui entre la rotule et la coquille et très peu de jeu. Ce système d'attelage assure une mobilité dans tous les sens entre le chariot porteur (1) et le tracteur (5). Il apporte également plus de confort de conduite puisqu'il supprime les à-coups.

Selon un exemple de réalisation non représenté, la structure de liaison (7) est reliée à la structure longitudinale (2) par l'intermédiaire d'un système à glissière avec un coulissement sensiblement vertical. La partie arrière de la structure longitudinale (2) est réalisée de manière à assurer le guidage vertical de la structure de liaison (7). Le coulissement vertical de la structure de liaison (7) est réalisé par l'organe de manoeuvre (10). L'organe de manoeuvre (10) est ainsi relié à la structure longitudinale (2) et à la structure de liaison (7). Il s'étend sensiblement verticalement dans le plan vertical médian (11) du chariot (1). La course de l'organe de manoeuvre (10) ainsi que la course de la glissière sont telles qu'un relevage de la charrue (20) est suffisant pour dégager les corps de labour (21) du sol.

Selon un autre exemple de réalisation, qui n'est pas représenté, la machine agricole est une charrue semi-portée simple, c'est-à-dire qu'elle n'est pas réversible.

Dans une autre réalisation, la structure de liaison (7) est déplaçable en hauteur au moyen d'au moins deux organes de manoeuvre (10). Dans cette réalisation, un organe de manoeuvre est disposé de chaque côté du plan vertical médian (11) du chariot porteur (1). Selon une alternative, l'organe de manoeuvre (10) est constitué d'un vérin du type simple effet.

Il est bien évident que l'invention n'est pas limitée aux modes de réalisation décrits ci-dessus et représentés sur les figures annexées. Des modifications restent possibles dans le domaine de protection défini par les revendications.

## Revendications

1. Chariot porteur (1) constitué d'une structure longitudinale (2) comportant à son extrémité avant une tête d'attelage (3) destinée à être reliée à un point d'attelage (4) d'un tracteur (5) et s'appuyant au sol via des roues (6), les roues du chariot porteur s'appuient au sol au travail et au transport, ladite structure longitudinale (2) est destinée à recevoir à son extrémité arrière une charrue semi-portée (20), ladite charrue (20) présentant un joint de type cardan (23) comprenant un axe d'articulation (24) sensiblement horizontal et un axe d'articulation (25) sensiblement vertical, le chariot présentant une structure de liaison (7) avec une extrémité avant reliée à ladite structure longitudinale (2) et une extrémité arrière destinée à être reliée à l'un des axes (24, 25) dudit cardan (23), l'extrémité arrière de ladite structure de liaison (7) est déplacée en hauteur par l'intermédiaire d'un organe de manoeuvre (10).

2. Chariot porteur selon la revendication 1, ***caractérisé en ce* que** ladite structure de liaison (7) est constituée d'une bielle (12) avec deux axes d'articulation (13, 14), ladite première articulation (13) est solidaire de ladite structure longitudinale (2) et dont ladite deuxième articulation (14) est reliée audit axe horizontal (24) dudit cardan (23).

3. Chariot porteur selon la revendication 1, ***caractérisé en ce* que** ladite structure de liaison (7) est constituée d'une paire de bielles (12, 17) dont les axes (13, 14, 18, 19) sont solidaires de ladite structure longitudinale (2) et les axes arrière sont reliés audit axe vertical (25) dudit cardan (23) au moyen d'une chape (8), lesdites bielles (12, 17) forment sensiblement un parallélogramme.

4. Chariot porteur selon la revendication 1, ***caractérisé en ce* que** ladite structure de liaison (7) est constituée d'un système à glissière sensiblement vertical dont la partie fixe est reliée à ladite structure longitudinale (2) et la partie mobile est reliée audit axe vertical (25) dudit cardan (23) au moyen d'une chape (8).

5. Chariot porteur selon la revendication 3 ou 4, ***caractérisé en ce* que** ledit axe vertical (25) s'étend dans le voisinage dudit axe horizontal (24).

6. Chariot porteur selon l'une quelconque des revendications 1 à 5, ***caractérisé en ce* que** ledit organe de manoeuvre (10) est disposé sensiblement dans le plan vertical médian (11) et est constitué d'un seul vérin hydraulique.

7. Chariot porteur selon l'une quelconque des revendications 1 à 6, ***caractérisé en ce* que** ledit organe de manoeuvre (10) s'étend, en vue de côté, à l'arrière de ladite structure longitudinale (2).

8. Chariot porteur selon l'une quelconque des revendications 1 à 7, ***caractérisé en ce* que** ledit organe de manoeuvre (10) est lié d'une part à l'extrémité arrière de ladite structure longitudinale (2) par l'intermédiaire d'une troisième articulation (15) et d'autre part à ladite structure de liaison (7) par l'intermédiaire d'une quatrième articulation (16).

9. Chariot porteur selon l'une quelconque des revendications 1 à 8, ***caractérisé en ce* que** ladite structure de liaison (7) s'appuie au sol par l'intermédiaire de roues d'appui (26).

10. Charrue semi-portée, ***caractérisée en ce* qu'**elle est accrochée à un tracteur (5) par l'intermédiaire d'un chariot porteur (1) selon l'une quelconque des revendications 1 à 9.

## Patentansprüche

1. Tragwagen (1) der aus einer Längsstruktur (2) gebildet ist, die an ihrem vorderen Ende ein Kupplungskopf (3) umfasst, der dazu bestimmt ist mit einem Kupplungspunkt (4) eines Traktors (5) verbunden zu werden, der Tragwagen (1) stützt sich mittels Räder (6) auf dem Boden ab, die Räder des Tragwagens stützen sich bei der Arbeit und beim Transport auf dem Boden ab, die Längsstruktur (2) ist dazu bestimmt, an seinem hinteren Ende einen Aufsattelpflug (20) zu empfangen, wobei der Pflug (20) ein Gelenk (23) des Kardantyps mit einer im Wesentlichen horizontalen Gelenkachse (24) und einer im Wesentlichen vertikalen Gelenkachse (25) umfasst, wobei der Tragwagen eine Verbindungsvorrichtung (7) mit einem vorderen Ende, das mit der Längsstruktur (2) verbunden ist und einem hinteren Ende, das dazu bestimmt ist mit einer der Achsen (24, 25) des Kardans (23) verbunden zu werden, umfasst, das hintere Ende der Verbindungsvorrichtung (7) wird mittels eines Betätigungselements (10) in der Höhe verschoben.

2. Tragwagen nach Anspruch 1, ***dadurch gekennzeichnet,* dass** die Verbindungsvorrichtung (7) aus einem Zwischenglied (12) mit zwei Gelenkachsen (13, 14) gebildet ist, das erste Gelenk (13) ist fest mit der Längsstruktur (2) verbunden und das zweite Gelenk (14) ist mit der horizontalen Achse des Kardans (23) verbunden.

3. Tragwagen nach Anspruch 1, ***dadurch gekennzeichnet,* dass** die Verbindungsvorrichtung (7) aus einem Paar von Zwischengliedern (12, 17) gebildet ist, dessen Achsen (13, 14, 18, 19) fest mit der Längsstruktur (2) verbunden sind und dessen Hinterachsen mit der vertikalen Achse (25) des Kardans (23) mittels eines Gabelkopfes (8) verbunden sind, die Zwischenglieder (12, 17) bilden im Wesentlichen ein Parallelogramm.

4. Tragwagen nach Anspruch 1, ***dadurch gekennzeichnet,* dass** die Verbindungsvorrichtung (7) aus einem im Wesentlichen vertikalen Gleitsystem gebildet ist, dessen fester Teil mit der Längsstruktur (2) verbunden ist und dessen beweglicher Teil mit der vertikalen Achse (25) des Kardans (23) mittels eines Gabelkopfes (8) verbunden ist.

5. Tragwagen nach Anspruch 3 oder 4, ***dadurch gekennzeichnet,* dass** die vertikale Achse (25) sich in der Nähe der horizontalen Achse (24) erstreckt.

6. Tragwagen nach irgend einem der Ansprüche 1 bis 5, ***dadurch gekennzeichnet,* dass** das Betätigungselement (10) im Wesentlichen in der vertikalen Mittelebene (11) angeordnet ist und aus einem einzigen Hydraulikzylinker gebildet ist.

7. Tragwagen nach irgend einem der Ansprüche 1 bis 6, ***dadurch gekennzeichnet,* dass** sich das Betätigungselement (10), in Seitenansicht, am Hinterteil der Längsstruktur (2) erstreckt.

8. Tragwagen nach irgend einem der Ansprüche 1 bis 7, ***dadurch gekennzeichnet,* dass** das Betätigungselement (10) einerseits mit dem hinteren Ende der Längsstruktur (2) mittels einem dritten Gelenk (15) und andererseits mit der Verbindungsvorrichtung (7) mittels einem vierten Gelenk (16) verbunden ist.

9. Tragwagen nach irgend einem der Ansprüche 1 bis 8, ***dadurch gekennzeichnet,* dass** sich die Verbindungsvorrichtung (7) mittels Stützräder (26) auf dem Boden abstützt.

10. Aufsattelpflug ***dadurch gekennzeichnet,* dass** er an einen Traktor (5) mittels eines Tragwagens (1) nach irgend einem der Ansprüche 1 bis 9 angekuppelt ist.

## Claims

1. Carriage (1) comprised of a longitudinal structure (2) comprising at its front end a coupling head (3) intended to be linked to a hitching point (4) of a tractor (5) and resting on the ground via wheels (6), the wheels of the carriage rest on the ground during work and transport, the said longitudinal structure (2) is intended to receive at its rear end a semi-mounted plough (20), the said plough (20) having a cardan type joint (23) comprising a substantially horizontal articulation axis (24) and a substantially vertical articulation axis (25), the carriage having a structure (7) connecting it to a front end linked to the said longitudinal structure (2) and a rear end intended to be linked to one of the axes (24, 25) of the said cardan (23), the rear end of the said connecting structure (7) is moved upwards by means of an operating element (10).

2. Carriage according to claim 1, ***characterised in that*** the said connecting structure (7) is comprised of a connecting rod (12) with two articulation axes (13, 14), the said first articulation (13) is rigidly fastened to the said longitudinal structure (2) and the said second articulation (14) is linked to the said horizontal axis (24) of the said cardan (23).

3. Carriage according to claim 1, ***characterised in that*** the said connecting structure (7) is comprised of a pair of connecting rods (12, 17) whose axes (13, 14, 18, 19) are rigidly fastened to the said longitudinal structure (2) and the rear axes are linked to the said vertical axis (25) of the said cardan (23) by means of a clevis (8), the said connecting rods (12, 17) substantially form a parallelogram.

4. Carriage according to claim 1, ***characterised in that*** the said connecting structure (7) is comprised of a substantially vertical sliding system of which the fixed part is linked to the said longitudinal structure (2) and the moving part is linked to the said vertical axis (25) of the said cardan (23) by means of a clevis (8).

5. Carriage according to claim 3 or 4, ***characterised in that*** the said vertical axis (25) extends in the vicinity of the said horizontal axis (24).

6. Carriage according to any one of the claims 1 to 5, ***characterised in that*** the said operating element (10) is substantially positioned in the median vertical plane (11) and is comprised of a single hydraulic jack.

7. Carriage according to any one of the claims 1 to 6, ***characterised in that*** the said operating element (10) extends, from a side view, at the rear of the said longitudinal structure (2).

8. Carriage according to any one of the claims 1 to 7, ***characterised in that*** the said operating element (10) is linked, on the one hand, to the rear end of the said longitudinal structure (2) by means of a third articulation (15) and, on the other hand, to the said connecting structure (7) by means of a fourth articulation (16).

9. Carriage according to any one of the claims 1 to 8, ***characterised in that*** the said connecting structure (7) rests on the ground by means of support wheels (26).

10. Semi-mounted plough, ***characterised in that*** it is hitched to a tractor (5) by means of a carriage (1) according to any one of the claims 1 to 9.
